# EUROPEAN PATENT APPLICATION

(11) **EP 4 773 134 A1**
(43) Date of publication of application: **08.07.2026**
(21) Application number: 26150365.0
(22) Date of filing: 06.01.2026
(51) Int. Cl.: G10L 13/033, G10L 15/26, G10L 21/0208, G10L 21/0364, G10L 25/30, G10L 21/003, G10L 25/48

(54) **SYSTEM AND METHOD FOR REAL-TIME ENHANCEMENT OF AUDIO INTELLIGIBILITY USING DEEPFAKE SYNTHESIS AND ADVANCED AI PROCESSORS IN TELECOMMUNICATIONS**

(30) Priority: 07.01.2025 US 202519012278
(71) Applicant: Mitel Networks Corporation, Ottawa, Ontario K2K 3K1 (CA)
(72) Inventor: Gallagher, Spencer, Beeston, NG9 2TA (GB); Naidoo, Logendra, Ottawa, K1S 0W8 (CA); Gupta, Mayankesh Kumar, 560045 Bangalore (IN)
(74) Representative: McDougall, James

(57) **Abstract**

A computer-implemented method for enhancing intelligibility of a participant in a meeting, that includes identifying, using at least a detection mechanism, when speech intelligibility and/or audio intelligibility of the participant of a plurality of participants in the meeting is impacted by one or more environmental conditions; upon evaluating, using at least a simulated human auditory model, noise types of speech of the participant in the meeting based at least partially on the speech intelligibility and/or the audio intelligibility of the participant, creating a local transcription of the speech by the participant in the meeting; and mapping, using at least a digital voice model, the local transcription onto a voice simulation of the participant to replicate vocal characteristics of the speech by the participant during the meeting.

## Description

### Background

There are many methods for communicating with other individuals. Yet, where a communication is in the form of a conference call, many issues can arise such as audio clarity issues due to ambient noise from sources like construction, airplanes, and machinery, alongside other factors such as echo, reverberation, double-talk, jitter, and relatively low network bandwidth. Echo can create delayed repetitions of sound, reverberation extends sounds unnaturally, and double-talk occurs when multiple people speak simultaneously, complicating voice isolation. Jitter can also disturb the regularity of audio packet delivery in VoIP calls, leading to scrambled or misplaced sounds. Low bandwidth can cause clarity to be distorted or unintelligible. For example, for a VoIP communication, the minimum bandwidth required is 60-100kbps. Usually in communications, such as meetings, instances are regularly observed when someone falls into low bandwidth or the participant is situated remotely where there is extremely low bandwidth or other signal degradation. Moreover, packet drops can cause voice cracking during a call which is disturbing to other participants on the call. If this persists, then participants may not be able to communicate properly.

These audio issues are exacerbated in environments with background noise from ongoing activities like construction, nearby traffic, or even a busy café. Each of these example environments introduces its own set of challenges, ranging from sudden, loud noises that can overpower speech, to constant hums that mask important tonalities in voices. Maintaining natural communication, despite environmental or technological shortcomings, underline a clear necessity to preserve the business context because filtering often is insufficient.

In addition to ambient noise, intelligibility in conference calls is further degraded by echo and audio repetitions when participants in the same physical space are also connected remotely. This scenario often leads to confusing overlaps and a disorienting audio experience, particularly in hybrid environments.

Relatedly, echo cancellation and noise gates of prior approaches address some audio clarity issues but fail to manage the scenario where audio streams from the same source are received both locally and remotely. This results in delayed audio overlaps that degrade the clarity and coherence of communication.

Prior attempts to address these problems have fallen short. This disclosure resolves these and other problems of the art.

### Brief Description of the Drawings

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements and wherein:
FIG. 1 is a block diagram of an example system according to aspects of this disclosure.
FIG. 2 is a block diagram of an example system and related operations according to aspects of this disclosure.
FIG. 3 is a block diagram of an example system and related operations according to aspects of this disclosure.
FIG. 4 is a block diagram of an example system and related operations according to aspects of this disclosure.
FIG. 5A is a block diagram of an example system according to aspects of this disclosure.
FIG. 5B is a block diagram of an example system according to aspects of this disclosure.
FIG. 6 is a block diagram of an example system and related operations according to aspects of this disclosure.
FIG. 7A is a block diagram of an example system according to aspects of this disclosure.
FIG. 7B is a block diagram of a method according to aspects of this disclosure.

It will be appreciated that elements in the figures are illustrated for simplicity and clarity and have not necessarily been drawn to scale. For example, the dimensions of some of the elements in the figures may be exaggerated relative to other elements to help to improve understanding of illustrated embodiments of the present invention.

### Detailed Description

The description of exemplary embodiments of the present invention provided herein is merely exemplary and is intended for purposes of illustration only; the following description is not intended to limit the scope of the invention as claimed. Moreover, recitation of multiple embodiments having stated features is not intended to exclude other embodiments having additional features or other embodiments incorporating different combinations of the stated features.

It must also be noted that, the term "exemplary" is used in the sense of "example," rather than "ideal."

It must also be noted that, as used in the specification and the appended claims, the singular forms "a," "an" and "the" include plural referents unless the context clearly dictates otherwise.

By "comprising" or "containing" or "including" it is meant that at least the named compound, element, particle, or method step is present in the composition or article or method, but does not exclude the presence of other compounds, materials, particles, method steps, even if the other such compounds, material, particles, method steps have the same function as what is named.

Relative terms, such as "about," "substantially," or "approximately" are used to include small variations with specific numerical values (e.g., +/- x%,), as well as including the situation of no variation (+/-0%). In various embodiments, the numerical value x is less than or equal to 10 - e.g., less than or equal to 5, to 2, to 1, or smaller.

As used herein, "database" refers to any suitable database for storing information, electronic files or code to be utilized to practice embodiments of this disclosure. As used herein, "server" refers to any suitable server, computer or computing device for performing functions utilized to practice embodiments of this disclosure.

As used herein, "server" refers to any suitable server, computer or computing device for performing functions utilized to practice embodiments of this disclosure.

As used herein, "software" refers to programs or other operating information utilized by a processor or other computing hardware.

As used herein, "communication" can mean a conversation or correspondence or call between multiple users, such as one or a combination of telephonic, video, audio/video, text, and/or a hybrid of any of the preceding, and any type of meeting involving multiple participants.

As used herein, "engine" refers to a data-processing apparatus, such as a processor, configured to execute computer program instructions, encoded on computer storage medium, wherein the instructions control the operation of the engine. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus.

As used herein, "a computer storage medium" can be, or be included in, a computer-readable storage device, a computer-readable storage substrate, a random or serial access memory array or device, or a combination of one or more of the substrates and devices. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., solid-state memory that forms part of a device, disks, or other storage devices). In accordance with examples of the disclosure, a non-transient computer readable medium containing program can perform functions of one or more methods, modules, engines and/or other system components as described herein.

As used herein, "tangible, non-transitory memory" refers to computer program instructions, encoded on computer storage medium for execution by, or to control the operation of, data processing apparatus. Alternatively, or additionally, the program instructions can be encoded on an artificially-generated propagated signal, e.g., a machine-generated electrical, optical, or electromagnetic signal, which is generated to encode information for transmission to a suitable receiver apparatus for execution by a data processing apparatus. A computer storage medium can be, or be included in, a computer-readable storage device, a computer-readable storage substrate, a random or serial access memory array or device, or a combination of one or more of the substrates and devices. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., solid-state memory that forms part of a device, disks, or other storage devices). In accordance with examples of the disclosure, a non-transient computer readable medium containing program can perform functions of one or more methods, modules, engines and/or other system components as described herein. The computer storage medium can also be, or be included in, random access memory (RAM), read-only memory (ROM), electronically erasable programmable ROM (EEPROM), flash memory or other memory technology, compact disc ROM (CD-ROM), digital versatile disks (DVD) or other optical storage, magnetic cassettes, magnetic tape, magnetic disk storage or other magnetic storage devices, or any other tangible, physical medium which can be used to store computer readable information.

As used herein, the terms "component," "engine," "model," "module," "system," "server," "processor," "memory," and the like are intended to include one or more computer-related units, such as but not limited to hardware, firmware, a combination of hardware and software, software, or software in execution. For example, a component may be, but is not limited to being, a process running on a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets, such as data from one component interacting with another component in a local system, distributed system, and/or across a network such as the Internet with other systems by way of the signal.

Previous approaches to resolving audio degradation in communication, such as conference calls, have employed techniques like echo cancellation, which primarily addresses the feedback loop between a user's microphone and speaker. Yet, this approach does not sufficiently address simultaneous background noise. Moreover, advanced filtering techniques, such as machine learning-based noise reduction, have been used in prior approaches to mitigate background disturbances. Such systems analyze audio patterns to differentiate between necessary (speech) and unnecessary (noise) sounds, enhancing overall call quality. However, these approaches still fall short with respect to the issue of hearing the same speaker's voice multiple times across different audio streams within a conference setting. The focus has been more on general noise reduction rather than the nuanced elimination of duplicate audio transmissions. Moreover, prior approaches used buffer and cache mechanisms which can manage speech to some extent, but more often failed with increased packet drops or limited network.

This disclosure describes systems and methods that, among other things, can integrate deepfake capabilities to enhance conference call clarity under extreme conditions of noise, weak bandwidth, and other auditory interferences. In some aspects, systems and methods of this disclosure can utilize a detection mechanism to identify when speech intelligibility is hampered by factors such as ambient noise. Utilizing a simulated human auditory model, systems and methods can evaluate the clarity of speech as perceived by a typical listener, thereby understanding and reacting to real-world listening challenges.

In some aspects, when conventional noise cancellation and bandwidth enhancement technologies are insufficient, systems and methods of this disclosure can resolve these issues by creating a local transcription of the spoken words and the local transcription can mapped onto an AI-generated likeness of the speaker, effectively creating a digital voice model that replicates the speaker's vocal characteristics. In some aspects, the local transcription can be transmitted to a cloud-based system and processed to reproduce a speaker's voice, eliminating artifacts introduced by noise or bandwidth issues. This reproduction can be fine-tuned to ensure the output matches the speaker's intended tone and inflection, restoring coherence and intelligibility.

In some aspects, restoring the communication with deepfake synthesis can include a predictive model that assesses whether the detected speech would be intelligible to a typical listener under current conditions. If the predictive model predicts poor intelligibility, the model can proactively enhance the speech quality using the deepfake voice model. In some aspects, the deepfake restoration operates transparently to the user in a manner that allows participants to speak normally and unaffected by the acoustic challenges in their environment. In turn, the solutions of this disclosure can advantageously change how audio is processed during calls, ensuring clear communication regardless of external noise or technical disturbances and enhancing the overall effectiveness of remote and hybrid workplace communications.

In some aspects, AI-driven deepfake synthesis with real-time detection and management of overlapping audio streams is combined. In some aspects, when the system identifies overlapping local and remote audio, the deepfake synthesis can be selected to replace only the remote audio portion with a clear, AI-generated reproduction of a speaker's natural voice, thus ensuring communication remains both clear and authentic.

This disclosure describes systems and methods that addresses the limitations of current noise suppression and intelligibility enhancement technologies by employing a novel approach using AI-driven deepfake technology. When standard audio processing fails to eliminate disturbances like background noise or bandwidth limitations, herein described systems and methods can ensure clear communication by recreating the speaker's voice through a series of advanced steps. Herein disclosed processes process initiates when traditional audio enhancement technologies, such as noise suppression or echo cancellation, fail to maintain the clarity and intelligibility of a conversation. In some aspects, this failure can actuate the system to engage a predictive model that assesses whether the detected speech would be intelligible to a typical listener under the current conditions.

In some aspects, if the speech is predicted by the predictive model to be unintelligible, the system can automatically switch to a conversational prosthetic mode, wherein the model can first perform a real-time transcription of the words spoken by any user experiencing audio issues. This transcription acts as a textual representation of the intended communication, ensuring that the content is preserved despite acoustic challenges.

In some aspects, the system can also monitor (e.g., continuously, periodically, etc.) audio streams and detect when overlapping audio occurs. Upon detection, the system can evaluate whether to mute the remote input directly or activate the deepfake synthesis. If the latter, the system can use a locally stored voice model of the speaker to generate a clear, natural-sounding voice replica from a transcript of the spoken words. This synthesis can seamlessly integrate into the conference, replacing the distorted or overlapped remote audio. This approach ensures that the output not only remains free from disruptions but also retains the speaker's unique vocal traits and intended expressions.

In some aspects, when traditional audio enhancement technologies fail, the system can activate a prosthetic mode that can begin by transcribing real-time speech from any users experiencing audio issues and maintain the integrity of the conversation despite disturbances. After transcription, the system can use a pre-trained voice model (e.g., a voice model that is stored in the cloud and/or locally), to create a deepfake audio stream that replicates the speaker's natural voice by mapping the text onto the digital voice model. This synthesized speech can be integrated into the ongoing call to ensure participants hear clear and coherent communication. This process advantageously overcomes audio quality issues in challenging environments and improves the functionality of digital communication platforms.

In some aspects, the described method here can be initiated when traditional audio enhancement technologies (e.g., noise suppression, echo cancellation, etc.) fail to maintain the clarity and intelligibility of a conversation. This prompts the system to switch automatically to the prosthetic mode that includes real-time transcription of the words spoken by participants experiencing audio quality issues.

In some aspects, this disclosure provides a computer-implemented method for enhancing intelligibility of a participant in a meeting that includes identifying, using at least a detection mechanism, when speech intelligibility and/or audio intelligibility of the participant of a plurality of participants in the meeting is impacted by one or more environmental conditions; upon evaluating, using at least a simulated human auditory model, noise types of speech of the participant in the meeting based at least partially on the speech intelligibility and/or the audio intelligibility of the participant, creating a local transcription of the speech by the participant in the meeting; and mapping, using at least a digital voice model, the local transcription onto a voice simulation of the participant to replicate vocal characteristics of the speech by the participant during the meeting.

In some aspects, this disclosure also provides a computer-implemented method that includes upon identifying one or more environmental conditions of a meeting participant of a plurality of meeting participants is causing speech of the meeting participant to be below an intelligibility threshold and/or an audio intelligibility threshold, implementing a voice-to-text model to create a local transcription of at least a portion of the speech; and generating, using at least a digital voice model, a voice simulation of at least the portion of the speech of the meeting participant to replicate the local transcription with vocal characteristics of the portion of the speech by the participant during the meeting.

In some aspects, this disclosure also provides a communication device configured to integrate deepfake voice simulations during a meeting. The communication device can include a processor and a tangible, non-transitory memory configured to communicate with the processor. The tangible, non-transitory memory can have instructions stored thereon that, in response to execution by the processor, cause the processor to perform operations that includes identifying, using at least a detection mechanism, when speech intelligibility of a participant of a plurality of participants in the meeting is impacted by one or more environmental conditions; upon determining, using at least a simulated human auditory model, a speech intelligibility of the participant is below an intelligibility threshold, creating a local transcription of the speech by the participant in the meeting; and generating, using at least a digital voice model, a voice simulation of the speech using at least the local transcription and a deepfake synthesis of the participant to replicate vocal characteristics of the speech by the participant during the meeting.

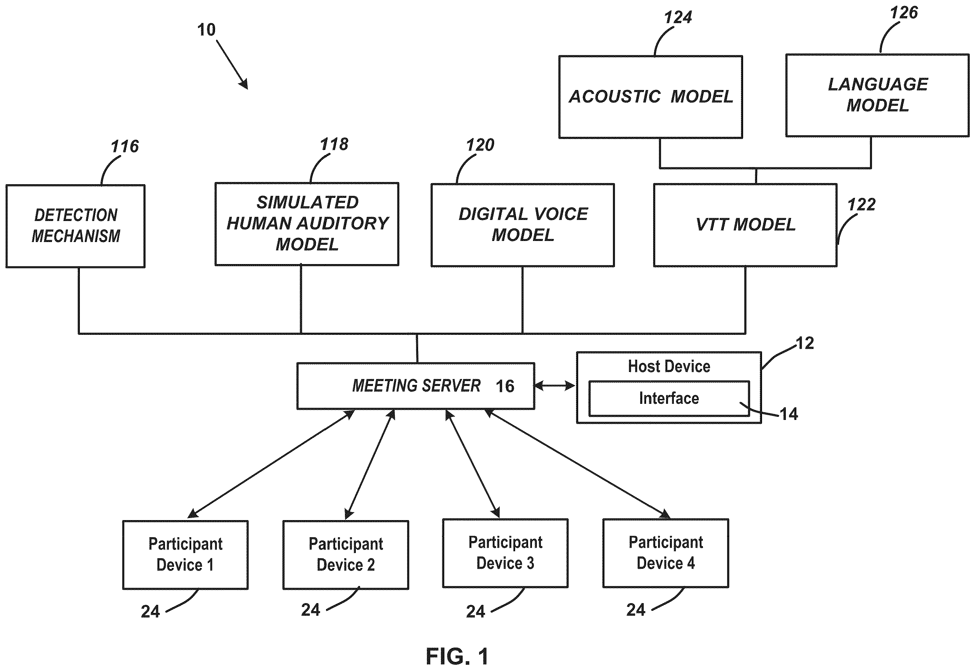

Turing to the Figures, wherein the purpose is to describe embodiments of this disclosure and not to limit the scope of the claims, FIG. 1 shows an exemplary system 10 for computer-implemented method for enhancing intelligibility of a participant in a meeting. When conventional noise cancellation and bandwidth enhancement technologies are insufficient, system 10 can initiate to create a local transcription of a participant's spoken words and the local transcription can be mapped onto a system-generated likeness of the participant, effectively creating a digital voice model that replicates the participant's vocal characteristics. The local transcription can be sent to a cloud-based system, such as meeting server 16, where they are processed to reproduce the participant's voice, and eliminate artifacts introduced by noise or bandwidth issues. This reproduction can be fine-tuned to ensure the output matches the participant's tone and inflection, restoring coherence and intelligibility. In some aspects, meeting server 16 can evaluate (e.g., using at least a simulated human auditory model 118 of or in communication with server 16), noise types of speech of one or more participants in a meeting based at least partially on the speech intelligibility and/or the audio intelligibility of the participant. Upon this evaluation, server 16 can create or otherwise cause creation of a local transcription of the speech and map the local transcription onto a voice simulation of the participant to replicate vocal characteristics of the speech by the participant during the meeting. In some aspects, meeting server 16 can pause a data feed of the communication (e.g., including but not limited to an audio stream, a text stream, a video stream, etc.) and shift the respective data feed to a lower bandwidth codec.

System 10 can include a host device 12 that is operated by a host (e.g., a meeting host of a meeting). Host device 12 can be any electronic device that is assigned to the conference host and that is capable of communicating with a meeting server 16 in the manner set forth herein, and can be a computer, smart phone, pad, or other suitable device. Host device 12 has an interface 14, which can be any suitable interface, such as a keyboard, touch screen, audio input, mouse, or other, for the host to send conference information, instructions, inquiries, comments, or other communications to meeting server 16, and to receive communications from meeting server 16.

Meeting server 16 is any suitable computing device, such any computer(s), processor(s), server(s), other device, or combination thereof. Server 16 can include software to provide instructions to the hardware of server 16 and/or may include a tangible, non-transitory memory, which includes computer program instructions that help control the operation of server 16. Meeting server 16 includes software to provide instructions to the hardware of meeting server 16 and/or may include a tangible, non-transitory memory, which includes computer program instructions that help control the operation of meeting server 16. Server 16 can be configured to identify when speech intelligibility and/or audio intelligibility of a meeting participant is impacted by one or more environmental conditions (e.g., overlapping local and remote audio, interfering conditions of noise, weak bandwidth, and other auditory interferences).

In some aspects, voice of the speech below the intelligibility threshold is prevented from flowing over a cloud-based voice over internet protocol (VoIP) calling system and meeting server 16 can notify other participants that the respective participant is experiencing one or more environmental conditions below the intelligibility threshold resulting in the speech being converted to text (e.g., by voice-to-text model 122).

One or more participant devices 24 are in communication with meeting server 16. Each participant device 24 is assigned to a unique participant and may be any suitable device, such as a mobile phone, a laptop, a tablet, as well as any suitable device, such as smart phones, table computers, laptop computers, desktop computers, game consoles, cordless phones, or the like. While only four participant devices 24 are shown in FIG.1, any number of participant devices are contemplated as needed or required with respect to a meeting between the participant devices of FIG. 1. Meeting server 16 is configured to coordinate a meeting with participant devices 24.

Server 16 can include or be in communication with a detection mechanism 116, a simulated human auditory model 118, a digital voice model 120, and a voice-to-text (VTT) model 122. Model 122 can be capable of create a local transcription of at least a portion of the speech.

Mechanism 116 can be configured to identify when speech intelligibility and/or audio intelligibility of the participant of a plurality of participants in the meeting is impacted by one or more environmental conditions, such as degradation due to ambient noise, background noise, jitter, echo, and bandwidth below a predetermined threshold that impact the audio intelligibility, etc. In some aspects, mechanism 116 can include or be in communication with a predictive model can determine severity of detected noise interference, including whether the severity has interfered with a participant's ability to focus during the communication, whether the speech intelligibility and/or the audio intelligibility is below a concentration threshold, and based on this analysis, cause one or more participants to automatically switch to a conversational prosthetic mode that can cause corresponding model 122 to perform the local transcription in real-time to generate a textual representation of the speech.

In some aspects, the predictive model can aid the system in deciding whether to mute disruptive noise or engage deepfake synthesis based on the severity of the interference. The predictive model is configured to assess whether detected speech would be intelligible to a typical listener under current conditions. If the predictive model predicts poor intelligibility, the predictive model proactively can enhance speech quality using digital voice model 120. In some aspects, system participants can be given control over audio enhancement through a manual activation option (e.g., a corresponding option presentable in a system user interface), which is advantageous for user engagement and responsiveness to varying audio environments. If the speech is predicted by the predictive model to be unintelligible, the system automatically switches to a conversational prosthetic mode, wherein the real-time transcription of the words spoken by participant(s) experiencing audio issues is performed. This transcription acts as a textual representation of the intended communication, ensuring that the content is preserved despite acoustic challenges. This preserved transcription acts as a safeguard, ensuring that the content is preserved despite any audio issues. In some aspects, this deepfake restoration operates advantageously so that participants speak normally, unaffected by the acoustic challenges in their environment, confident that their voices are conveyed with utmost clarity.

Model 118 can be configured to evaluate the clarity of speech as perceived by a typical listener, thereby understanding and reacting to real-world listening challenges. In some aspects, model 118 can evaluate noise types of speech of the participant in the meeting based at least partially on the speech intelligibility and/or the audio intelligibility of the participant. In some aspects, model 118 can determine whether a speech intelligibility of the participant is below an intelligibility threshold. Upon determining that the speech intelligibility is below the threshold, model 118 can create a local transcription of the speech by the participant in the meeting.

Model 120 can be configured to replicate vocal characteristics of a participant in the meeting. Model 120 can convert the local transcription generated by model 118 to a voice packet using phoneme generation logic and/or speech synthesis logic. In some aspects, model 120 can access a database of pre-stored formant characteristics of the participant to support generation of the voice simulation. Model 120 can evaluate, using at least the pre-stored formant characteristics of the participant and the voice simulation, whether an audio output of a voice simulation matches a tone, amplitude, and/or an inflection of the participant to synthesize a facsimile of at least the portion of the speech of the participant. Model 120 can finetune the voice simulation, using at least stored formant characteristics of the participant, by evaluating whether an audio output of the voice simulation matches a tone, amplitude, and/or an inflection of the participant to synthesize a facsimile of the speech by the participant that mirrors a natural voice of the participant. Model 120 can include or utilize a solution like WaveNet Speech synthesis, Tacotron 2, and/or the like, for their ability to generate high-quality audio from text.

In some aspects, model 120 can map the local transcription onto a voice simulation of the participant to replicate vocal characteristics of speech by participant(s) during the meeting. Model 120 can continuously adjust the voice simulation in real-time to react to one or more detected audio issues of the speech. Model 120 can integrate at least a deepfake synthesis to replace only a portion of the speech in generating the voice simulation depending at least partially on the evaluated noise types of the speech and/or depending at least partially on a severity of detected noise interference and whether the speech intelligibility and/or the audio intelligibility is below a concentration threshold. Model 120 can replace audio sections of the speech comprising a lower quality with synthesized speech sections Model 120 can eliminate artifacts of the speech introduced by the one or more environmental conditions.

In some aspects, model 120 can be or include one or more machine learning models. In some aspects, a machine learning model of this example can be generated based on applying respective training input with, optionally, the associated information paired with the output information as applied by a machine learning algorithm(s). The machine learning algorithm(s) may accept the foregoing aspects as training input, the output information and implement training using one or more techniques. For example, the machine learning models may be trained in one or more Convolutional Neural Networks (CNN), CNN with multiple-instance learning or multi-label multiple instance learning, Recurrent Neural Networks (RNN), Long-short term memory RNN (LSTM), Gated Recurrent Unit RNN (GRU), graph convolution networks, or the like or a combination thereof.

In some aspects, convolutional neural networks can directly learn the audio and other voice features of participants, which can work extremely well when there are large amounts of data to train on, whereas the other methods can be used with learned embeddings (e.g., descriptors) produced by a trained convolutional neural network, which can yield advantages when there are only small amounts of data to train on. The trained machine learning models of this disclosure may be configured to provide quality designations for meeting and/or participant speech data disclosed herein, including audio, text, video and other data thereof. Computerized methods of this disclosure that use machine learning models can include, but are not limited to, statistical analysis, autonomous or machine learning, and AI. AI may include, but is not limited to, deep learning, neural networks, classifications, clustering, and regression algorithms.

Model 120 can generate the voice simulation using at least a local transcription and a deepfake synthesis of the participant to replicate vocal characteristics of the speech by the participant during the meeting. In some aspects, model 120 can generate the voice simulation using a locally stored voice model of the participant that can be integrated back into the meeting to replace any distorted and/or overlapping audio of the speech. In some aspects, model 120 includes a deep neural network model that is trained to generate a high-quality audio facsimile of at least the portion of the speech. In some aspects, the high-quality audio facsimile can be generated using at least the local transcription and pre-stored formant characteristics of the participant.

In some aspects, model 122 can be configured for voice-to-text synthesis to create a local transcription of at least a portion of the speech. In some aspects, model 122 can create the local transcription upon one or more environmental conditions being identified as causing speech of a participant to be below an intelligibility threshold and/or an audio intelligibility threshold. In some aspects, model 122 can determine a relationship between an audio signal and phonetic units of the speech in question using at least acoustic model 124. Model 122 can determine statistical patterns and a probability of a sequence of words of the speech using at least language model 126.

In some aspects, model 122 can be implemented by determining a relationship between an audio signal and phonetic units of the speech, determining statistical patterns and a probability of a sequence of words of the speech, and converting the local transcription of the speech to an original voice output. The relationship can be determined using at least acoustic 124 model. The statistical patterns and probability of the sequence of words of the speech can be determined using at least the language model 126. The local transcription of the speech to the original output can be converted using an example decoder.

In some aspects, model 122 can be configured to receive an audio stream of the speech, extract audio features of the audio stream, analyze spectral features of the extracted audio features, assess a signal to noise ratio of the analyzed spectral features, and classify, using a machine learning model of model 122, attributes of the audio stream to determine determining that the speech is below the intelligibility threshold. In some aspects, once a prosthetic mode is activated upon determining that participant speech is unintelligible, model 122, can transcribe real-time speech from users experiencing audio issues and maintain the integrity of the conversation despite disturbances. After transcription, model 122 can communicate with digital voice model 120 to create a deepfake audio stream that replicates the speaker's natural voice by mapping the text onto digital voice model 120. This synthesized speech can be integrated into the ongoing communication (e.g., the call, conference, videoconference or the like between the participants), ensuring all participants hear clear and coherent communication. This process effectively overcomes audio quality issues in challenging environments and improves the functionality of digital communication platforms.

Model 122 can include or otherwise use a deep learning model that can develop and/or extract user voice metadata from an initial voice portion of the communication (e.g., a short voice sample, such as approximately 2-3 seconds, of one of the users of the communication, such as a short audio sample at the beginning of the communication before the signal has degraded or otherwise weakened). Model 122 can synthesize the text message data with a user voice profile so that the reconstructed voice data can include speech that can match tone, rhythm, cadence, etc., of the respective user. Model 122 can generate a voice data feed of a user and transmit this reconstructed voice data feed to carrier server 110 and/or any connected user devices of the communication.

In some aspects of this disclosure, systems and methods are provided that include VTT operations at the end of the participant device and which send text packets to meeting server 16 and perform text-to-voice (TTV) conversion at the meeting server 16. In some aspects, text packets of the VTT operations require only a bandwidth of approximately 1-2kbps, which is still useable in scenarios where network or signal issues are evident but emergency services are required for some real time situation that necessitates voice communication. This voice packet of the text-to-voice conversion can be implemented by one or more of models 118, 120, 124, and 126. The voice packet can be sent to one or more meeting participants by meeting server 16 so that the participant experiencing signal degradation or other factors contributing to speech unintelligibility can still be able to communicate even in degraded network conditions. Alternatively or in addition, this solution can be used as another way of communication where all or more voice packet transmission happens over text thereby saving network bandwidth for other operations.

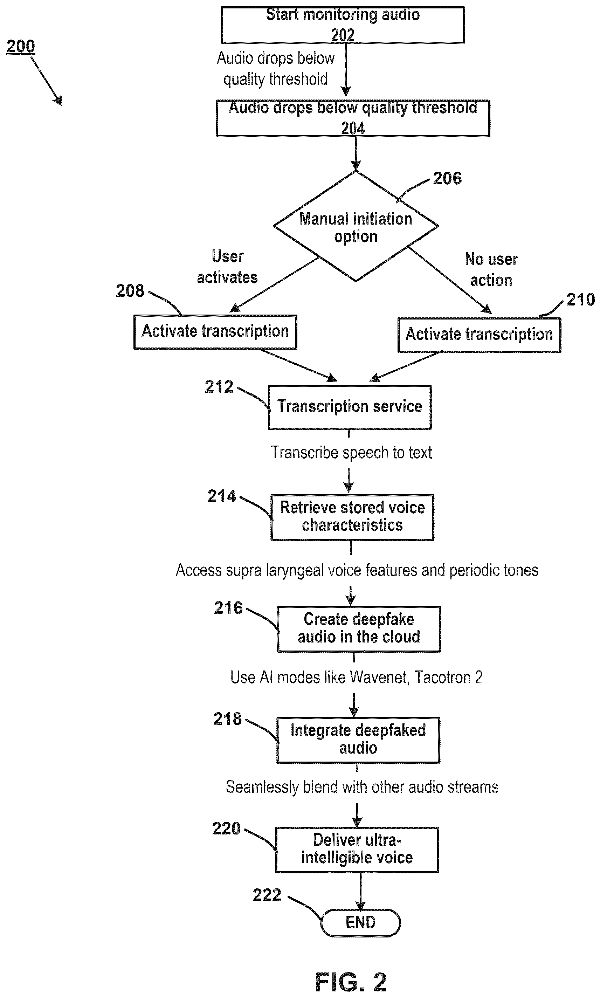

FIG. 2 is a block diagram of an example system 200 and related operations for enhancing audio intelligibility, according to one example of this disclosure. As shown, the system can initiate monitoring audio at operation 202. Once audio intelligibility is determined to be below an intelligibility threshold at operation 204, the respective participant user of the communication can be presented at operation 206 with a manual initiation option. If the user activates, then at operation 208 transcription operations can be activated at least using transcription services of operation 212. If there is no user action, then transcription can still be activated at operation 210 (e.g., based in part on system detected intelligibility thresholds being satisfied). When operation 212 is implemented, speech of a participant of the communication whose speech is deemed unintelligible can be transcribed to text (e.g., using in some aspects VTT model 122). At operation 214, stored voice characteristics of the participant can be retrieved (e.g., by accessing a database of pre-stored formant characteristics of the participant, accessing supra laryngeal voice features and periodic tones, etc). At operation 216, audio can be generated by the system based in part on the stored voice characteristics and the transcription. In some aspects, the generated audio can be deepfake audio that can be used with tools such as WaveNet Speech synthesis, Tacotron 2, and/or the like, to generate high-quality audio from the voice transcription and using the participant voice characteristics. At operation 218, the audio generated at operation 216 can be integrated into the communication (e.g., seamlessly blended into the communication, such as with one or more other audio streams). At operation 220, the ultra-intelligible audio generated can be delivered to other participants of the communication and at operation 222, the process can end.

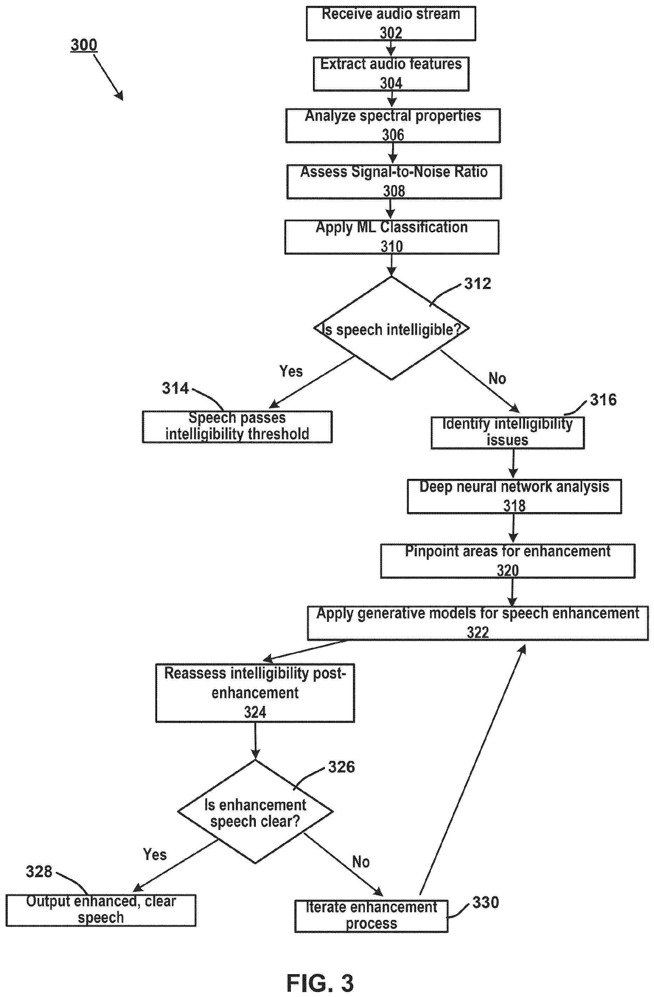

FIG. 3 is a block diagram of an example system 300 and related operations for enhancing audio intelligibility, according to one example of this disclosure. As shown, the system can commence operations by receiving an audio stream at operation 302 and audio features can be extracted at operation 304 to gather relevant data like frequency, amplitude, and duration from the audio stream. Spectral properties can be analyzed at operation 306 to determine speech quality and detect noise (white noise) distortions, signal-to-noise ratio is assessed at operation 308 to determine how much noise is present in the audio relative to the speech, and machine learning (ML) classification can be implemented at operation 310 to determine whether speech intelligibility is above or below a predetermined threshold. At operation 312, speech intelligibility is evaluated (e.g., using aspects such as information from spectral analysis, signal-to-noise ratio assessment, ML classification, etc.). If the speech is deemed intelligible, the at operation 314 the speech passes the intelligibility threshold and no further operations are required. If the speech is deemed insufficiently intelligibility after operation 312, then at operation 316 the respective intelligibility issues are identified using aspects such as deep neural network analysis such as in operation 318. At operation 320, areas for enhancement are pinpointed and at operation 322 generative models for speech enhancement are applied. At operation 324, intelligibility post-enhancement is reassessed to determine at operation 326 whether the enhancing operations (e.g., one or more prior operations) have caused the speech to be clear. If yes, then at operation 328 the enhanced, clear audio speech is output back to the communication with the other participants. If no, then at operation 330 the enhancement operations (e.g., operations 316 to operation 322) are iterated until determining at operation 326 again if the enhanced audio is sufficiently clear.

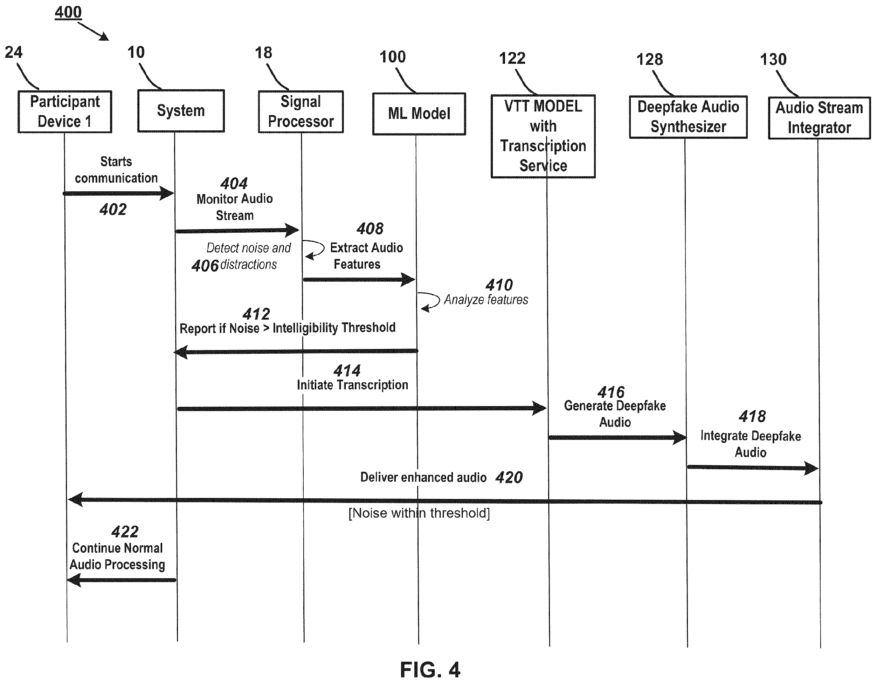

FIG. 4 is a block diagram of an example system 400 and related operations for determining an intelligibility threshold, according to one example of this disclosure. As shown, system 400 can include participant device 24, system 10, signal processor 18, ML model 100 (e.g., one or a combination of models 118, 120, 116), deepfake audio synthesizer 128, and audio stream integrator model 130. During operations, participant device 1 can commence communications at operation 402 (e.g., a communication can begin and speech can be shared amongst a plurality of participants using participant devices). At operation 404, system 10 can monitor one or more audio streams of the communication. At operation 406, signal processor 18 can detect presence of noise and/or other distractions in the one or more monitored audio streams. At operation 408, signal processor 18 can extract audio features (e.g., frequency, amplitude, and duration from the audio stream) and at operation 410, model 100 can analyze the extracted features. At operation 412, if detected noise and/or distractions, if any, are determined to be greater than the intelligibility threshold, model 100 will report to the system 10 which can cause operation 414 to commence to initiate voice transcription using model 122. At operation 416, the deepfake audio synthesizer can generate deepfake audio using at least the voice transcription of operation 414 and determined or accessed voice characteristics of the participant. At operation 418, the generated deepfake audio can be integrated into the communication by model 130 so that at operation 420 enhanced audio that is within the predetermined threshold is delivered to the communication. At operation 422, normal audio processing of the communication amongst the participants can continue with the enhanced audio integrated therein.

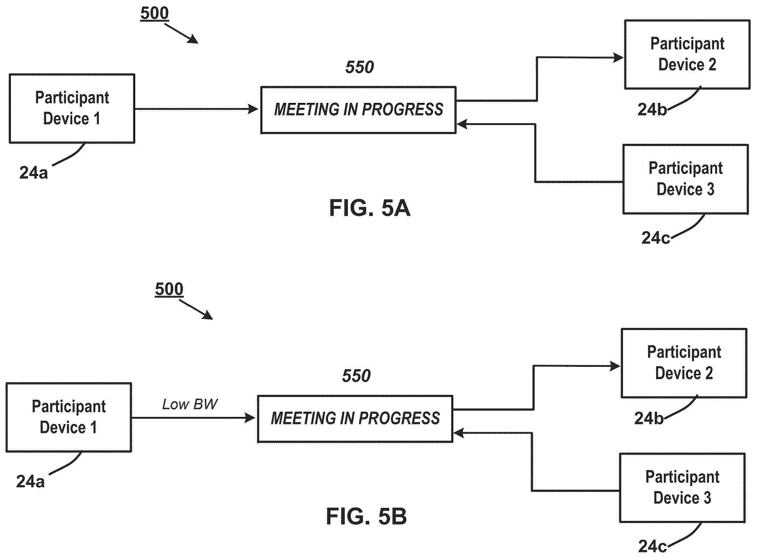

FIG. 5A is a block diagram of an example system 500 and related operations for a meeting 550 in progress that involves a plurality of participants using participant devices 24a, 24b, 24c. In the depicted meeting of FIG. 5A, all participant devices 24a, 24b, 24c presently have sufficient network speeds to maintain the communication without degradation or other noise distortions. During meeting 550 of FIG. 5A, meeting server 16 can monitor aspects to identify when intelligibility may degrade to the point of being difficult for one or more participants to understand.

Turning to FIG. 5B, meeting 550 continues but participant device 24a in the depicted example now faces an issue with their internet speeds causing delay in their contribution and receipt of data packets associated with the communication, including resulting in poor voice quality. At this point and as a result, participant devices 24a, 24b, 24c all experience the delay from participant 24a and making it difficult to understand the voice of the participant using participant device 24a.

By monitoring the audio streams and detecting the intelligibility is negatively impacted, system 500 can implement operations to control VoIP communication by stopping VoIP packet(s) and enabling the VTT conversation automatically. In some aspects, meeting server 16 can notify all the other participant devices 24b, 24c that due to signal degradation, participant device 24a has shifted to operations that include VTT and TTV operations. Aspects of server 16, including VTT model 122 can convert an audio stream of participant device 24a (e.g., the voice packet) to a voice transcription and transmit the voice transcription to participant devices 24b, 24c.

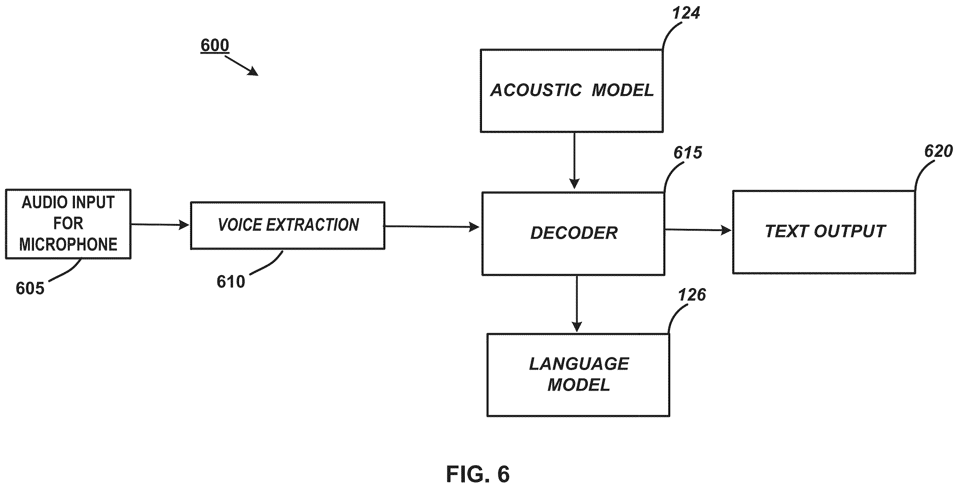

FIG. 6 is a block diagram of an example system 600 configured to implement the operations of this disclosure, such as those illustrated in FIGs. 5A to 5B. System 600 can include introducing an audio stream at audio input at operation 605 that can undergo voice extraction at operation 610 that can be transmitted to decoder 615. Acoustic model 124 and language model 126 described previously can be in communication with decoder 615. Acoustic model 124 can be configured to find out the relationship between the audio signal and phonetic units and language model 126 can give the statistical patterns and probability of the sequence of the words. Decoder 615 can leverage models 124, 126 and convert the text of the original voice output. In some aspects, decoder 615, using at least models 124, 126, can further receive the voice input from the user microphone, the extracted voice data, and based in part on the identified relevant features that represent the speech, use Mel-Frequency Cepstral Coefficients or filler blanks to lay the groundwork for further processing. The converted text by decoder, using at least models 124, 126, can be transmitted to participant devices 24b, 24c in the meeting using a reduced bandwidth requirement of at least approximately 1-2kbps.

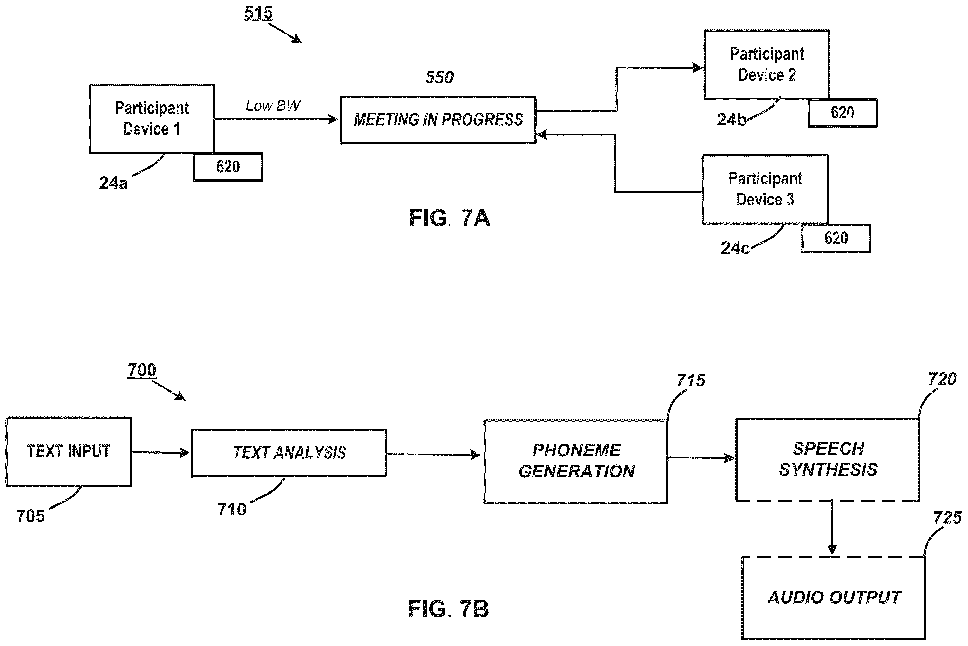

Turning to FIG. 7A, meeting 550 continues from prior FIG. 5B. The voice transcription 620 is shown having been transmitted to each participant device 24a, 24b, 24c and at the meeting server 16, the voice transcription, using at least models 124, 126, can be converted to voice (e.g., voice packets) and output to other participant devices 24b, 24c.

FIG. 7B is a block diagram of an example system 700 configured to implement the operations of this disclosure, such as those illustrated in FIG. 7A. At operation 705, text input can be introduced and at operation 710, a text analysis module can process the text input for text analysis for speech synthesis by parsing, handling number and abbreviations. At operation 715, a phoneme generation module can process the analyzed text to generate a corresponding sound of letter used in analyzed text. At operation 720, a speech synthesis module can generate corresponding sound in spoken words based at least one the analyzed text and output from the phoneme generation module. At operation 725, the enhanced audio can be output to the other participant devices, such as participants 24b, 24c of meeting 550 as in FIG. 7A.

According to certain embodiments, systems and methods of this disclosure can be included in user-facing front-end including software, firmware, and/or hardware to integrate at least a portion of a communication of a user from a user device. In some embodiments, this interface of a user device associated with systems and methods herein can include a mobile application ("app") or other software executable on a user device, such as a mobile computing device (e.g. a smart phone). It is understood that any mobile computing device of this disclosure can be configured to communicate with one or more servers (e.g., meeting server 16). In another embodiment, the interface may include a web-based application accessible through a browser or other software, or a desktop application. The app can be configured to provide or support functionality of this disclosure.

According to certain embodiments, the one or more servers of the herein disclosed system (e.g., meeting server 16), can each be connected directly or wirelessly (e.g., 3G/4G/5G, RF, a local wireless network, and/or the like). The server(s) can be operatively connected to one or more web servers across one or more networks, each server operable to permanently store and/or continuously update a database of master data. Servers of this disclosure can include back-end architecture with, or be in communication with, one or more of database server(s), whereby functionality of the system may be split between multiple servers, which may be provided by one or more discrete providers. In an example embodiment, the database server may store master data as well as logging and trace information. Software of the database server may be based on the object-relational database system PostgresSQL the database server is not so limited other approaches may be used as needed or required. This database server is not limited to only organizing and storing data and instead, it may be also used to eliminate a need of having an application server (e.g., 2nd Layer). In some embodiments, almost every functional requirement may be realized by using the database's programming language, PL/pgSQL. The database may also provide an API to the web server for data interchange based on JSON specifications. In some embodiments, the database server may also directly interact with the described functionality of respective computing devices.

In some examples, a computer system of this disclosure can be capable of implementing aspects of the present disclosure in accordance with one or more embodiments described herein, including those examples shown in FIGS. 1-7. It should be appreciated that any computer system of examples of this disclosure may be implemented within a single computing device or a computing system formed with multiple connected computing devices. The computer system of this disclosure may be configured to perform various distributed computing tasks, in which processing and/or storage resources may be distributed among the multiple devices.

In some examples, the computer system can include a processing unit ("CPU"), a system memory, and a system bus that couples the memory to the CPU. The computer system further includes a mass storage device for storing program modules. The program modules may be operable to analyze data from any herein disclosed data feeds, databases, classify user states based on the data feeds, determine responsive actions, and/or control any related operations. The program modules may include an application for performing data acquisition and/or processing functions as described herein. In some examples, the mass storage device can be connected to the CPU through a mass storage controller connected to the bus. The mass storage device and its associated computer-storage media provide non-volatile storage for the computer system. Although the description of computer-storage media contained herein refers to a mass storage device, such as a hard disk or CD-ROM drive, it should be appreciated by those skilled in the art that computer-storage media can be any available computer storage media that can be accessed by the computer system.

By way of example and not limitation, computer storage media (also referred to herein as "computer-readable storage medium" or "computer-readable storage media") may include volatile and non-volatile, removable and non-removable media implemented in any method or technology for storage of information such as computer-storage instructions, data structures, program modules, or other data. For example, computer storage media includes, but is not limited to, RAM, ROM, EPROM, EEPROM, flash memory or other solid state memory technology, CD-ROM, digital versatile disks ("DVD"), HD-DVD, BLU-RAY, or other optical storage, magnetic cassettes, magnetic tape, magnetic disk storage or other magnetic storage devices, or any other medium which can be used to store the desired information and which can be accessed by the computer system. "Computer storage media", "computer-readable storage medium" or "computer-readable storage media" as described herein do not include transitory signals.

According to various embodiments, the computer system may operate in a networked environment using connections to other local or remote computers through a network via a network interface unit connected to the bus. The network interface unit may facilitate connection of the computing device inputs and outputs to one or more suitable networks and/or connections such as a local area network (LAN), a wide area network (WAN), the Internet, a cellular network, a radio frequency (RF) network, a Bluetooth-enabled network, a Wi-Fi enabled network, a satellite-based network, or other wired and/or wireless networks for communication with external devices and/or systems.

In some examples, the computer system may also include an input/output controller for receiving and processing input from any of a number of input devices. Input devices may include one or more of keyboards, mice, stylus, touchscreens, microphones, audio capturing devices, and image/video capturing devices. An end user may utilize the input devices to interact with a user interface, for example a graphical user interface, for managing various functions performed by the computer system. The bus may enable the processing unit to read code and/or data to/from the mass storage device or other computer-storage media.

In some examples, the computer-storage media may represent apparatus in the form of storage elements that are implemented using any suitable technology, including but not limited to semiconductors, magnetic materials, optics, or the like. The computer-storage media may represent memory components, whether characterized as RAM, ROM, flash, or other types of technology. The computer storage media may also represent secondary storage, whether implemented as hard drives or otherwise. Hard drive implementations may be characterized as solid state or may include rotating media storing magnetically-encoded information. The program modules, which include the data feed application, may include instructions that, when loaded into the processing unit and executed, cause the computer system to provide functions associated with one or more embodiments illustrated in the figures of this disclosure. The program modules may also provide various tools or techniques by which the computer system may participate within the overall systems or operating environments using the components, flows, and data structures discussed throughout this description.

In some examples, the program modules may, when loaded into the processing unit and executed, transform the processing unit and the overall computer system from a general-purpose computing system into a special-purpose computing system. The processing unit may be constructed from any number of transistors or other discrete circuit elements, which may individually or collectively assume any number of states. More specifically, the processing unit may operate as a finite-state machine, in response to executable instructions contained within the program modules. These computer-executable instructions may transform the processing unit by specifying how the processing unit transitions between states, thereby transforming the transistors or other discrete hardware elements constituting the processing unit.

Encoding the program modules may also transform the physical structure of the computer-storage media. The specific transformation of physical structure may depend on various factors, in different implementations of this description. Examples of such factors may include but are not limited to the technology used to implement the computer-storage media, whether the computer storage media are characterized as primary or secondary storage, and the like. For example, if the computer storage media are implemented as semiconductor-based memory, the program modules may transform the physical state of the semiconductor memory, when the software is encoded therein. For example, the program modules may transform the state of transistors, capacitors, or other discrete circuit elements constituting the semiconductor memory.

As another example, the computer storage media may be implemented using magnetic or optical technology. In such implementations, the program modules may transform the physical state of magnetic or optical media, when the software is encoded therein. These transformations may include altering the magnetic characteristics of particular locations within given magnetic media. These transformations may also include altering the physical features or characteristics of particular locations within given optical media, to change the optical characteristics of those locations. Other transformations of physical media are possible without departing from the scope of the present description, with the foregoing examples provided only to facilitate this discussion.

In some examples, the systems and methods of this disclosure can be used to replace audio that is of relatively low quality with a relatively high-quality replicated audio that retains the resonant characteristics - such as amplitude and tonality - that are unique to a user's voice. In turn, the reproduced voice can be virtually indistinguishable from the original in terms of auditory characteristics.

In some examples, the systems and methods of this disclosure can be used when standard audio processing fails to eliminate disturbances like background noise or bandwidth limitations, etc. Rather, the systems and methods of this disclosure ensure clear communication by recreating the participant's voice through a series of advanced steps. The methods of this disclosure can initiate when traditional audio enhancement technologies, such as noise suppression or echo cancellation, fail to maintain the clarity and intelligibility of a conversation. In some aspects, audio is replaced from an ongoing communication that is of low quality with a high-quality replicated audio that retains the resonant characteristics (e.g., amplitude and tonality) unique to an individual's voice.

The features of the various embodiments may be stand alone or combined in any combination. Further, unless otherwise noted, various illustrated steps of a method can be performed sequentially or at the same time, and not necessarily be performed in the order illustrated. It will be recognized that changes and modifications may be made to the exemplary embodiments without departing from the scope of the present invention. These and other changes or modifications are intended to be included within the scope of the present invention, as expressed in the following claims.

The present invention has been described above with reference to a number of exemplary embodiments and examples. It should be appreciated that the particular embodiments shown and described herein are illustrative of the invention and its best mode and are not intended to limit in any way the scope of the invention as set forth in the claims. The features of the various embodiments may stand alone or be combined in any combination. Further, unless otherwise noted, various illustrated steps of a method can be performed sequentially or at the same time, and not necessarily be performed in the order illustrated. It will be recognized that changes and modifications may be made to the exemplary embodiments without departing from the scope of the present invention. These and other changes or modifications are intended to be included within the scope of the present invention, as expressed in the following claims.

## Claims

1. A computer-implemented method for enhancing intelligibility of a participant in a meeting, comprising:
identifying, using at least a detection mechanism, when speech intelligibility and/or audio intelligibility of the participant of a plurality of participants in the meeting is impacted by one or more environmental conditions;
upon evaluating, using at least a simulated human auditory model, noise types of speech of the participant in the meeting based at least partially on the speech intelligibility and/or the audio intelligibility of the participant, creating a local transcription of the speech by the participant in the meeting; and
mapping, using at least a digital voice model, the local transcription onto a voice simulation of the participant to replicate vocal characteristics of the speech by the participant during the meeting.

2. The computer-implemented method of claim 1, wherein the one or more environmental conditions comprise at least one of ambient noise, background noise, jitter, echo, and bandwidth below a predetermined threshold that impact the audio intelligibility.

3. The computer-implemented method of claim 1 or claim 2, wherein the one or more environmental conditions comprises overlapping local and remote audio, and wherein the digital voice model integrates at least a deepfake synthesis to replace only a portion of the speech in generating the voice simulation depending at least partially on the evaluated noise types of the speech; or
wherein the digital voice model integrates at least a deepfake synthesis to replace only a portion of the speech in generating the voice simulation depending at least partially on a severity of detected noise interference and whether the speech intelligibility and/or the audio intelligibility is below a concentration threshold.

4. The computer-implemented method of any preceding claim, wherein the digital voice model is or comprises a deep learning model.

5. The computer-implemented method of any preceding claim, further comprising:
eliminating, using at least the digital voice model, artifacts of the speech introduced by the one or more environmental conditions.

6. The computer-implemented method of any preceding claim, further comprising:
fine tuning, using at least the digital voice model and stored formant characteristics of the participant, the voice simulation by evaluating whether an audio output of the voice simulation matches a tone and/or an inflection of the participant to synthesize a facsimile of the speech by the participant that mirrors a natural voice of the participant.

7. The computer-implemented method of any preceding claim, further comprising:
delivering the voice simulation to the plurality of the participants during the meeting.

8. The computer-implemented method of any preceding claim, further comprising:
pausing, using at least a meeting server, a video data feed of the speech; and
shifting, using at least the meeting server, the video data feed to a lower bandwidth codec configured to maintain voice intelligibility.

9. The computer-implemented method of any preceding claim, further comprising:
converting, using at least a meeting server, the local transcription to a voice packet using phoneme generation logic and/or speech synthesis logic.

10. The computer-implemented method of any preceding claim, wherein the identifying when speech intelligibility and/or the audio intelligibility of the participant comprises:
upon determining, using at least a predictive model and severity of detected noise interference, whether the speech intelligibility and/or the audio intelligibility is below a concentration threshold, automatically switching to a conversational prosthetic mode that performs the local transcription in real-time to generate a textual representation of the speech
and/or further comprising:
replacing, using at least the digital voice model, audio sections of the speech comprising a lower quality with synthesized speech sections.

11. A computer-implemented method, comprising:
upon identifying one or more environmental conditions of a meeting participant of a plurality of meeting participants is causing speech of the meeting participant to be below an intelligibility threshold and/or an audio intelligibility threshold, implementing a voice-to-text model to create a local transcription of at least a portion of the speech; and
generating, using at least a digital voice model, a voice simulation of at least the portion of the speech of the meeting participant to replicate the local transcription with vocal characteristics of the portion of the speech by the participant during the meeting.

12. The computer-implemented method of claim 11, further comprising:
continuously adjusting the voice simulation in real-time to react to one or more detected audio issues of the speech,
and/or wherein the voice-to-text model is implemented by:
determining, using at least an acoustic model, a relationship between an audio signal and phonetic units of the speech;
determining, using at least a language model, statistical patterns and a probability of a sequence of words of the speech; and
converting, using at least a decoder, the local transcription of the speech to an original voice output.

13. The computer-implemented method of claim 11 or claim 12, wherein the voice-to-text model is configured to:
receive an audio stream of the speech,
extract audio features of the audio stream,
analyze spectral features of the extracted audio features,
assess a signal to noise ratio of the analyzed spectral features, and
classify, using a machine learning model of the voice-to-text model, attributes of the audio stream to determine determining that the speech is below the intelligibility threshold
and/or further comprising:
accessing, using at least the digital voice model, a database of pre-stored formant characteristics of the participant to support generation of the voice simulation; and
evaluating, using at least the pre-stored formant characteristics of the participant and the voice simulation, whether an audio output of the voice simulation matches a tone and/or an inflection of the participant to synthesize a facsimile of at least the portion of the speech of the participant.

14. The computer-implemented method of any of claims 11 to 13, wherein the digital voice model comprises a deep neural network model trained to generate a high-quality audio facsimile of at least the portion of the speech using at least the local transcription and pre-stored formant characteristics of the participant,
and/or wherein the generating the voice simulation using a locally stored voice model of the participant integrated back into the meeting to replacing any distorted or overlapping audio of the speech
and/or wherein the method further comprises:
preventing voice of the speech below the intelligibility threshold from flowing over a cloud-based voice over internet protocol (VoIP) calling system; and
notifying, using at least a meeting server, the other participants that the participant is experiencing one or more environmental conditions below the intelligibility threshold resulting in the speech being converted to text by the voice-to-text model of the meeting server.

15. A communication device configured to integrate deepfake voice simulations during a meeting, comprising:
a processor; and
a tangible, non-transitory memory configured to communicate with the processor, the tangible, non-transitory memory having instructions stored thereon that, in response to execution by the processor, cause the processor to perform operations comprising:
identifying, using at least a detection mechanism, when speech intelligibility of a participant of a plurality of participants in the meeting is impacted by one or more environmental conditions;
upon determining, using at least a simulated human auditory model, a speech intelligibility of the participant is below an intelligibility threshold, creating a local transcription of the speech by the participant in the meeting; and
generating, using at least a digital voice model, a voice simulation of the speech using at least the local transcription and a deepfake synthesis of the participant to replicate vocal characteristics of the speech by the participant during the meeting.
